(19) Europäisches Patentamt / European Patent Office / Office européen des brevets

(11) **EP 3 286 912 B1**

(12) **FASCICULE DE BREVET EUROPEEN**

(45) Date de publication et mention de la délivrance du brevet:
**08.09.2021 Bulletin 2021/36**

(21) Numéro de dépôt: **16782433.3**

(22) Date de dépôt: **21.04.2016**

(51) Int Cl.:
*H04N 5/74* (2006.01)      *B82Y 20/00* (2011.01)
*G03B 21/606* (2014.01)      *G03B 35/00* (2021.01)
*G03B 35/16* (2021.01)      *H01L 33/06* (2010.01)

(86) Numéro de dépôt international:
**PCT/CA2016/050466**

(87) Numéro de publication internationale:
**WO 2016/168936 (27.10.2016 Gazette 2016/43)**

(54) **MATÉRIAUX NANOCOMPOSITES HYBRIDES, SYSTÈME DE BALAYAGE LASER, ET LEUR APPLICATION EN PROJECTION D'IMAGERIE VOLUMÉTRIQUE**

HYBRIDNANOVERBUNDSTOFFE, LASERABTASTSYSTEM UND VERWENDUNG DAVON BEI DER VOLUMETRISCHEN BILDPROJEKTION

HYBRID NANOCOMPOSITE MATERIALS, LASER SCANNING SYSTEM AND USE THEREOF IN VOLUMETRIC IMAGE PROJECTION

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **21.04.2015 CA 2889103**

(43) Date de publication de la demande:
**28.02.2018 Bulletin 2018/09**

(73) Titulaire: **Lux Image Inc.**
**Montréal, QC H2Z 0A5 (CA)**

(72) Inventeurs:
- **ALLEN, Claudine**
  **Saint-isidore, Québec G0S 2S0 (CA)**
- **THIBAULT, Simon**
  **Québec, Québec G2G 2V7 (CA)**
- **TALBOT-LANCIAULT, Alicia**
  **Québec, Québec G1K 1V9 (CA)**

- **BLAIS, Philippe**
  **Québec, Québec G1Y 3S7 (CA)**
- **ST-ONGE, Guillaume**
  **Laurier-Station, Québec G0S 1N0 (CA)**
- **DESAULNIERS, Pierre**
  **Québec, Québec G1K 3N9 (CA)**

(74) Mandataire: **Cabinet Laurent & Charras**
**Le Contemporain**
**50 Chemin de la Bruyère**
**69574 Dardilly Cedex (FR)**

(56) Documents cités:
EP-A1- 2 520 636      WO-A1-2014/107425
WO-A1-2014/107426      WO-A2-2007/127214
US-A1- 2004 227 694      US-A1- 2011 012 503
US-A1- 2012 234 460      US-B1- 6 897 999

EP 3 286 912 B1

**Description**

**DOMAINE DE L'INVENTION**

La présente invention concerne essentiellement le domaine des matériaux nano-composites et du balayage laser en trois dimensions pour applications en projection d'imagerie volumétrique ou en trois dimensions (3D). L'invention est particulièrement adaptée aux domaines de la conception assistée par ordinateur (CAO), du divertissement ou au domaine médical sans toutefois être limitée à ces domaines.

**HISTORIQUE DE L'INVENTION**

La technologie d'aujourd'hui rend possible la synthèse de matériaux plus complexes et plus adaptés aux besoins expérimentaux et industriels. En ayant une liste précise des caractéristiques souhaitées, le matériau peut être fabriqué pour remplir entièrement la fonction à laquelle il est destiné. L'optique est un des domaines où la science des matériaux vient rendre possible plusieurs avancées expérimentales et théoriques.

Les points quantiques sont des nanostructures semi-conductrices. La particularité de ces nanostructures est de toujours réémettre l'énergie absorbée à la même fréquence. Lorsqu'un semiconducteur absorbe de l'énergie, un ou plusieurs électrons se déplacent vers la bande de conduction, laissant un ou plusieurs trous dans la bande de valence. L'électron et le trou restent liés par une force électrique et forment un exciton. Les points quantiques, de par leur nature cristalline, confinent les excitons sur quelques nanomètres dans les trois dimensions comme s'ils étaient pris dans une boîte. Puisque seulement les multiples entiers des longueurs d'ondes sont permis dans la boîte de dimensions fixes, les niveaux d'énergie sont discrétisés. C'est la taille du point quantique qui détermine la longueur d'onde d'émission de celui-ci. Plus un point quantique a un grand rayon, plus courte est sa longueur d'onde d'émission. Par exemple, les points quantiques rouges ont une plus grande taille que les points quantiques bleus. Lorsqu'ils sont excités par une source d'énergie, un de leurs électrons monte vers la bande de conduction pour ensuite se relaxer et retomber dans la bande de valence. Un photon est alors émis par fluorescence.

L'absorption linéaire suivie de fluorescence peut être décrite par un objet qui reçoit de l'énergie, principalement électrique ou lumineuse, et se l'approprie. Cet objet, plus énergétique qu'auparavant, se retrouve dans un état excité avec un surplus d'énergie. Dans l'objectif de se relaxer et de retomber à une énergie moindre, l'objet, s'il est fluorescence, peut émettre un photon de longueur d'onde précise. Les points quantiques sont des objets fluorescence qui peuvent absorber de l'énergie lumineuse dans une certaine plage de fréquences et la réémettre à une fréquence propre.

Les points quantiques sont utilisés par plusieurs chercheurs pour diverses applications. Leur synthèse et leurs propriétés sont bien documentées (REISS, Peter, et al., 2009, « Core/Shell Semiconductor Nanocrystals », Small, Volume 5, Issue 2, pages 154-168). De plus, des points quantiques ont déjà été dispersés dans une matrice de polyméthacrylate de méthyle (PMMA), mais seulement pour des applications en photovoltaïque (KLIMOV, Victor I. et MEINARDI, Francesco : Large-area luminescent solar concentrators based on 'Stokes-shift-engineered' nanocrystals in a mass-polymerized PMMA matrix, Nature Photonics, 8, 392-399 (2014)) dans l'objectif de fabriquer des panneaux solaires plus performants. Finalement, l'absorption à deux photons de points quantiques a été démontrée expérimentalement (KARABULUT, Ibrahim et BASKOUTAS, Sotirios : Linear and nonlinear optical absorption coefficients and refractive index changes in spherical quantum dots: Effects of impurities, electric field, size, and optical intensity, Journal of Applied Physics, 103, 2008). La technique du *Z-Scan* a été développé afin de caractériser l'absorption non linéaire (VAN STRYLAND, Eric W. et SHEIK-BAHAE, Mansoor, Z-Scan Measurements of Optical Nonlinearities, Characterization Techniques and Tabulations for Organic Nonlinear Materials, page 655-692).

Le brevet américain no. US 7,858,913 B2 (Refai et al., 2010), décrit un dispositif d'affichage à surface lumineuse permettant d'obtenir une image tridimensionnelle, qui comporte une pluralité de particules en suspension dans un dispositif d'affichage volumétrique. Un premier système de projection projette des tranches séquentielles d'énergie électromagnétique d'une ou plusieurs longueurs d'onde sur la longueur et la largeur du dispositif d'affichage volumétrique, ce qui excite des particules de façon à former une image bidimensionnelle. Un second système de projection projette des tranches translationnelles d'énergie électromagnétique d'une ou plusieurs longueurs d'onde, qui croisent les particules excitées à travers l'épaisseur du dispositif d'affichage volumétrique. Un système de commande synchronise la projection de la source d'image et la source d'activation, de façon que l'image bidimensionnelle et les tranches translationnelles excitent les particules pendant une durée prédéterminée, ce qui permet auxdites particules de s'éclairer pour former une image tridimensionnelle éclairée. L'invention décrite dans ce brevet nécessite l'utilisation de deux systèmes de projection afin de pouvoir réaliser l'image tridimensionnelle.

Le brevet américain no. US 6,897,999 B1 (Bass et al., 2005) décrit une invention basée sur la dispersion uniforme de particules d'environ 0,5 microns à environ 50 microns dans des endroits appropriés dans un support d'affichage hôte transparent. Les emplacements appropriés sont des emplacements de pixels qui produisent l'émission de couleur souhaitée lorsqu'ils sont éclairés par un laser d'excitation correspondant. Les particules peuvent être des plastiques dopés aux colorants, des cristaux dopés aux terres rares, ainsi que des analogues de ceux-ci, dans des milieux d'affichage tels que le plastique, le plastique acrylique et le verre. Le premier mode de réalisation préféré comprend jusqu'à trois lasers émettant chacun un faisceau laser à une longueur d'onde différente choisie pour exciter des groupes spécifiques de particules dans les zones éclairées par le faisceau laser du support d'affichage. Un deuxième mode de réalisation concerne un affichage tri-dimensionnel ayant jusqu'à six faisceaux laser, chacun étant émis à une longueur d'onde différente. Il existe trois types de particules différents, avec des quantités sélectionnées de chacune uniformément dispersée dans des endroits appropriés du support d'affichage. Un type de particule lorsqu'il est excité par un premier faisceau laser émet une fluorescence visible rouge, un second type de particule lorsqu'il est excité par le second faisceau laser émet une fluorescence visible verte, et un troisième type de particule lorsqu'il est excité par le troisième faisceau laser émet une fluorescence visible bleue.

La demande de brevet américain no. US 2004/0227694 A1 (2004) décrit un système, des matériaux et des conceptions d'un dispositif d'affichage d'image 3D qui utilise un processus de fluorescence induite par laser (LIF). Le dispositif d'affichage de l'invention comprend au moins deux sources laser, un volume d'affichage contenant des nanoparticules fluorescentes et/ou des molécules organométalliques uniformément dissoutes, des mécanismes de direction de faisceau lumineux et des boucles de rétroaction. Le volume d'affichage contenant les centres d'émission est un milieu stable et uniforme sans couches multiples ou particules de taille micrométrique. Des centres d'émission de multiples couleurs peuvent être dispersés ou dissous dans le même support transparent pour l'affichage à faisceau transversal. Une fois éclairé, le volume fluorescent convertit les lumières laser infrarouge et/ou proche infrarouge en émissions rouges, vertes ou bleues, au niveau du point de croisement laser. Rastérisation ou balayage du point de croisement laser dans un milieu spécial selon une donnée prédéfinie ou programmée génère une image tridimensionnelle réelle dans le volume fluorescent. Dans un mode de réalisation préféré, un volume d'affichage tridimensionnel contient trois types de nanoparticules de LIF et/ou de molécules dispersées (dissoutes) pour créer des couleurs rouge, verte et bleue d'une manière aléatoire, uniforme dans un milieu de type fluide transparent. Le milieu transparent peut être un liquide, un solide ou un matériau de type gel. Le volume est entouré d'une coque de protection qui est également transparente pour l'observateur.

D'autres systèmes de projection volumétriques connus sont décrits dans les demandes de brevets américains nos. US 2013/0314416 A1 (Kuhlman et al.; 2013) et US 2014/0327747 A1 (Kong, 2014).

Les systèmes actuels de matrices transparentes dopées avec des nano-émetteurs, tels que des points quantiques ou des nano-cristaux, ont une réponse à l'excitation photonique trop faible pour permettre l'utilisation de ces matrices dans des systèmes de projection volumétrique 3D. Il existe donc un besoin pour un nouveau type de matrice de matériaux nano-composites dont la réponse à l'excitation photonique sera suffisamment puissante pour permettre son utilisation dans ces systèmes de projection volumétriques.

## RÉSUMÉ DE L'INVENTION

L'invention concerne en premier lieu une matrice de projection hybride pour la projection volumétrique d'imagerie en trois dimensions (3D), la matrice comprenant dans un support solide transparent à la lumière une combinaison synergique d'au moins deux types différents de particules à l'intérieur dudit support solide, dont:

(1) un premier type de particules comprenant des particules nano-émettrices adaptées pour absorber de façon non-linéaire un ou deux photons et émettre une lumière visible ; et
(1) un second type de particules constitué d'au moins un additif rehaussant l'absorption non-linéaire à un ou deux photons et l'émission de lumière visible par les particules nano-émettrices, permettant ainsi d'intensifier et/ou modifier la lumière émise par les particules nano-émettrices, ledit additif comprenant des nanoparticules d'or, des nanoparticules d'argent, des nanoparticules semiconductrices, de la nanocellulose, des nanotubes de carbone, des matériaux bidimensionnels, du graphène, ou des polymères conducteurs et/ou semi-conducteurs.

L'invention concerne aussi un procédé de fabrication d'une matrice de projection hybride pour la projection volumétrique d'imagerie en trois dimensions (3D), le procédé comprenant les étapes suivantes :

a) mélanger dans une solution permettant la synthèse d'un support solide transparent à la lumière, une première quantité donnée d'un premier type de particules comprenant des particules nano-émettrices et une seconde quantité donnée d'un second type de particules constitué d'au moins un additif, ledit additif comprenant des nanoparticules d'or, des nanoparticules d'argent, des nanoparticules semiconductrices, de la nanocellulose, des nanotubes de carbone, des matériaux bidimensionnels, du graphène, ou des polymères conducteurs et/ou semi-conducteurs; et
b) solidifier le mélange obtenu pour obtenir la matrice.

L'invention concerne aussi un système de projection volumétrique d'imagerie en trois dimensions (3D), le système comprenant :

(1) une source émettrice de photons; et

(2) la matrice de projection hybride telle que définie ici, la matrice étant située en aval de la source émettrice afin de recevoir les photons depuis la source émettrice, la matrice émettant alors une lumière visible afin de créer une image en trois dimensions. L'invention concerne aussi l'utilisation de la matrice de projection hybride telle que définie ici, pour former une image en trois dimensions.

L'invention ne se limite pas au nombre de types de particule utilisées dans la matrice, et on pourrait généraliser en ajoutant un troisième, quatrième, cinquième, ... n-ième type de particules pour produire des matrices hybrides tertiaires, quaternaires, etc.

Le but d'introduire le deuxième type de particules ou additifs, est de modifier les propriétés de la matrice contenant le type unique initial de particules afin d'atteindre de meilleures performances de projection volumétrique ou encore générer de nouvelles caractéristiques qui n'existaient pas à une seule particule. L'invention permet aussi de pouvoir mesurer l'absorption non linéaire des points quantiques dans une matrice de plastique et de vérifier l'impact d'un ajout d'additif sur le phénomène.

Selon un élément préférentiel de l'invention, des points quantiques sont les structures choisies pour produire l'effet non linéaire souhaité dans le matériau optique (matrice). Ils sont retenus de préférence par du plastique afin de pouvoir être utilisés dans un contexte pratique et limiter leurs effets dommageables sur la santé.

De plus, à la différence des systèmes actuels de matrices transparentes dopées avec des nano-émetteurs, tels que des points quantiques ou des nano-cristaux, qui ont une réponse à l'excitation photonique trop faible pour permettre l'utilisation de ces matrices dans des systèmes de projection volumétrique 3D, la réponse à l'excitation photonique par la présente invention est suffisamment puissante pour permettre son utilisation dans ces systèmes de projection volumétriques. De plus, cela permet de diminuer dans le système de projection, la puissance de la source émettrice de photon, telle qu'un laser, tout en obtenant une image visible dans la matrice, permettant ainsi de préserver la matrice plastique en évitant que celle-ci ne fonde sous l'effet du rayon photonique ou laser.

Les phénomènes optiques impliqués dans la présente invention portent préférentiellement sur l'absorption à un ou deux photons, plus préférentiellement deux photons, et l'émission de l'énergie par fluorescence. L'absorption à deux photons, suivie de fluorescence, rend possible l'obtention d'une longueur d'onde d'émission visible même lorsque les points quantiques sont excités à l'aide de lumière infrarouge. Cela permet d'exploiter ce phénomène pour fabriquer des écrans à projection volumétrique. De préférence, cette technologie utilise un signal incident invisible pour les yeux humains afin de ne pas altérer l'image présentée. Lorsque le point quantique reçoit le signal, soit deux photons infrarouges, il réémet son énergie en un seul photon visible, créant ainsi une image pouvant être en trois dimensions.

La présente invention se démarque préférentiellement dans la mesure où il propose de réunir ces aspects, en plaçant les points quantiques préférentiellement dans un matériau plastique, tel que du PMMA mais non limité à ce matériau, pour caractériser leur absorption non linéaire à l'aide d'un laser *Z-Scan.*

La présente invention ouvre la voie à de nouvelles possibilités de fonctionnalités en plus de viser à rehausser et améliorer tout l'ensemble des propriétés optiques (temps de vie soit la "rapidité" d'émission de lumière, qualité colorimétrique, "quantité d'absorption", etc.) des matériaux qui contiennent uniquement les nano-émetteurs.

Les caractéristiques de la présente invention qui sont considérées comme nouvelles et inventives seront décrites avec plus de détails dans les revendications présentées ci-après.

## BRÈVE DESCRIPTION DES DESSINS

Les avantages, objectifs et caractéristiques de la présente invention seront plus facilement observables en se référant à la description détaillée suivante qui sera faite à l'aide des figures dans lesquelles :

La Figure 1 représente la distance du faisceau au détecteur par rapport à la position de l'échantillon. Les distances inscrites sont mesurées approximativement par rapport au point focal du laser. Une présence plus faible de couleur rouge signifie une intensité de lumière moindre, suggérant ainsi de l'absorption.

La Figure 2 montre des échantillons cylindriques sous de la lumière ultraviolette. La lame circulaire est découpée à partir des cylindres et polie.

La Figure 3 illustre un montage épuré d'un laser de type *Z-Scan* avec les paramètres utilisés lors de l'expérimentation.

La Figure 4 est un graphique présentant l'intensité moyenne de la lumière en fonction de la position des échantillons 60, 61 et 62 à une puissance de 10 mW (OD10).

La Figure 5 est un graphique présentant l'intensité moyenne de la lumière en fonction de la position des échantillons 60, 61 et 62 à une puissance de 13,5 mW (OD8).

La Figure 6 est un graphique présentant l'intensité moyenne de la lumière en fonction de la position des échantillons 60, 61 et 62 à une puissance de 20 mW (OD6).

La Figure 7 est un graphique présentant l'intensité moyenne de la lumière en fonction de la position des échantillons 63, 64 et 65 à une puissance de 20 mW (OD6).

La Figure 8 est un graphique présentant l'intensité moyenne de la lumière en fonction de la position des échantillons 63, 64 et 65 à une puissance de 24 mW (OD5).

La Figure 9 montre un arrangement en cube de plusieurs réglettes de PMMA dopée avec des points quantiques, non-éclairé (Figure 9A) et éclairé par un faisceau de lumière UV (Figure 9B).

La Figure 10 illustre un faisceau laser gaussien autour de la zone focale.

La Figure 11 est un schéma illustrant la géométrie de l'écran de volume.

La Figure 12 illustre un exemple type de système de balayage laser.

## DESCRIPTION DE CERTAINS ÉLÉMENTS PRÉFÉRENTIELS DE L'INVENTION

Selon un premier mode préférentiel de réalisation, l'invention consiste en une matrice de projection hybride pour la projection volumétrique d'imagerie en trois dimensions (3D). La matrice comprend dans un support solide transparent à la lumière une combinaison synergique d'au moins deux types différents de particules :

(1) un premier type comprenant des particules nano-émettrices adaptées pour absorber de façon non-linéaire un ou deux photons et émettre une lumière visible ; et
(2) un second type constitué d'au moins un additif rehaussant l'absorption non-linéaire à un ou deux photons et l'émission de lumière visible par les particules nano-émettrices, permettant ainsi d'intensifier et/ou modifier la lumière émise par les particules nano-émettrices.

La matrice est préférentiellement une matrice dans laquelle le support solide transparent à la lumière comprend un support polymérique, tel que par exemple du polyméthacrylate de méthyle (PMMA). On comprend que d'autres matériaux polymères formant des structures transparentes à la lumière pourraient être utilisés dans l'invention.
Préférentiellement, les particules nano-émettrices comprennent des points quantiques, des fils ou tiges quantiques, des puits quantiques, des anneaux quantiques, des nano-cristaux tels que des nano-cristaux cœur/coquille ou des nano-cristaux hétérostructurés, des nano-plaquettes, des molécules fluorescentes, des fluorophores, et/ou des phosphores. Plus préférentiellement, les particules nano-émettrices comprennent des points quantiques.
Les nanoparticules métalliques sont plus préférentiellement des nanoparticules d'argent ou des nanoparticules de carbone.
Préférentiellement, le ou les additifs utilisés dans la présente invention comprennent des nanoparticules d'or, des nanoparticules d'argent, des nanoparticules semiconductrices, de la nano-cellulose, des nanotubes de carbone, des matériaux bidimensionnels, du graphène, ou des polymères conducteurs et/ou semi-conducteurs. Plus préférentiellement, le ou les additifs comprennent des particules métalliques qui sont des nanoparticules d'argent et/ou des nanotubes de carbone.
La matrice est préférentiellement sous la forme d'une lame ayant une épaisseur comprise entre 2 et 5 mm. La lame a préférentiellement une surface polie, avec un fini d'environ 1 $\mu$m.
Selon un second aspect, l'invention concerne un procédé de fabrication d'une matrice de projection hybride pour la projection volumétrique d'imagerie en trois dimensions (3D), le procédé comprenant les étapes suivantes :

a) mélanger dans une solution permettant la synthèse d'un support solide transparent à la lumière, une première quantité donnée d'un premier type de particules comprenant des particules nano-émettrices et une seconde quantité donnée d'un second type de particules constitué d'au moins un additif; et
b) solidifier le mélange obtenu pour obtenir la matrice.

Préférentiellement, la solution permettant la synthèse du support solide transparent à la lumière comprend un monomère qui une fois polymérisé forme un support polymérique transparent à la lumière. Tel que mentionné ci-dessus, la matrice est préférentiellement une matrice dans laquelle le support solide transparent à la lumière comprend un support polymérique, tel que par exemple du polyméthacrylate de méthyle (PMMA). On comprend que d'autres matériaux polymères formant des structures transparentes à la lumière pourraient être utilisés dans l'invention.

Selon un mode préférentiel, le procédé de fabrication de la matrice de projection hybride pour la projection volumétrique d'imagerie en trois dimensions (3D) comprend les étapes suivantes :

a1) mélanger la solution de monomères permettant la synthèse du support polymérique, la première quantité donnée du premier type de particules comprenant les particules nano-émettrices et la seconde quantité donnée du second type de particules comprenant ledit moins un additif ;
a2) insérer un initiateur de polymérisation dans le mélange ; et
bl) laisser polymériser le mélange obtenu pour obtenir la matrice.

Les matériaux utilisés dans le procédé sont tels que déjà décrits ci-dessus.

Préférentiellement, pour une matrice à base de points quantiques et de particules métalliques (argent et/ou nanotubes de carbone), le procédé comprend en outre l'étape de préchauffer le mélange à une température d'environ 90°C avant l'insertion de l'initiateur. Le procédé peut comprendre en outre les étapes de verser le mélange dans un moule de forme donnée comme des prismes ou cylindres, et de laisser polymériser le mélange à une température d'environ 75°C pour une durée d'environ 24 h.

Le procédé peut comprendre en outre l'étape de découper la matrice obtenue après polymérisation sous forme de lames parallèles. Le procédé peut comprendre en outre l'étape de sélectionner des lames adjacentes afin d'obtenir des concentrations similaires en nanoparticules dans chacune des lames sélectionnées. Les lames sélectionnées ont préférentiellement une épaisseur entre 2 mm et 5 mm.

Le procédé peut comprendre en outre l'étape de polir la lame. La lame polie a préférentiellement un fini d'environ 1 $\mu$m.

Lors du procédé de fabrication, la matrice comprend préférentiellement une concentration de points quantiques entre 2 $\mu$l/ml et 8 $\mu$l/ml, et une concentration de nanoparticules d'argent entre 0.01 mg/ml et 0.2 mg/ml. La matrice peut aussi comprend une concentration de points quantiques entre 2 $\mu$l/ml et 8 $\mu$l/ml, et une concentration de nanotubes de carbone entre 0,0001 mg/ml et 0,01 mg/ml.

Selon un troisième aspect, l'invention consiste en un système de projection volumétrique d'imagerie en trois dimensions (3D). Ce système comprend une source émettrice de photons, tel qu'un laser; et la matrice de projection hybride telle que définie ici. La matrice étant située en aval de la source émettrice afin de recevoir les photons depuis la source émettrice, la matrice émettant alors une lumière visible afin de créer une image en trois dimensions.

Préférentiellement, la source émettrice de photons est un laser qui émet de la lumière, tel que de la lumière infrarouge (IR) invisible, de la lumière UV ou visible. De préférence, on utilise de la lumière IR invisible pour atténuer les interactions avec la lumière émise par la matrice.

Le système peut comprendre un laser qui produit un balayage X-Y pour positionner un foyer du faisceau pour chaque plan transversal d'une image. Le balayage produit peut être un balayage Z pour positionner un foyer du faisceau pour chaque plan en profondeur de l'image. Le balayage produit peut aussi permettre de remplir un voxel.

Selon un mode préférentiel de l'invention, le système de projection comprend un laser qui produit un balayage découplé en trois parties permettant d'augmenter une fréquence de rafraîchissement totale du système, le balayage comprenant :

(1) un premier balayage X-Y pour positionner un foyer du faisceau pour chaque plan transversal d'une image;
(2) un deuxième balayage Z pour positionner un foyer du faisceau pour chaque plan en profondeur de l'image; et
(3) un troisième balayage pour compléter une image et remplir un voxel.

Selon un autre aspect, l'invention consiste en une méthode de projection volumétrique d'imagerie en trois dimensions (3D) qui consiste à projeter des photons sur la matrice de projection hybride telle que définie ici, la matrice émettant alors de la lumière visible pour former une image en trois dimensions.

Les éléments de la méthode sont ceux déjà décrits ici.

**Absorption à deux photons et fluorescence** : Schématisons la situation par un photon incident de fréquence *fi* qui serait absorbé par un point quantique. Le point quantique réémettrait cette énergie en un photon de fréquence *fe* où, par conservation d'énergie, *fi > fe*. La différence d'énergie est perdue en chaleur. Imaginons maintenant que deux photons de fréquence *f1* arrivent au même moment sur le point quantique et qu'ils soient tous deux simultanément absorbés. Si *2f1 > f2,* où *f2* est la fréquence d'émission du point quantique, il se produit de l'absorption à deux photons suivie potentiellement de fluorescence. Pour que le phénomène ait lieu, les photons incidents ne doivent pas obligatoirement être à la même fréquence. Cependant, la somme de leur fréquence respective doit être dans la plage d'absorption du point quantique ou de l'objet étudié.

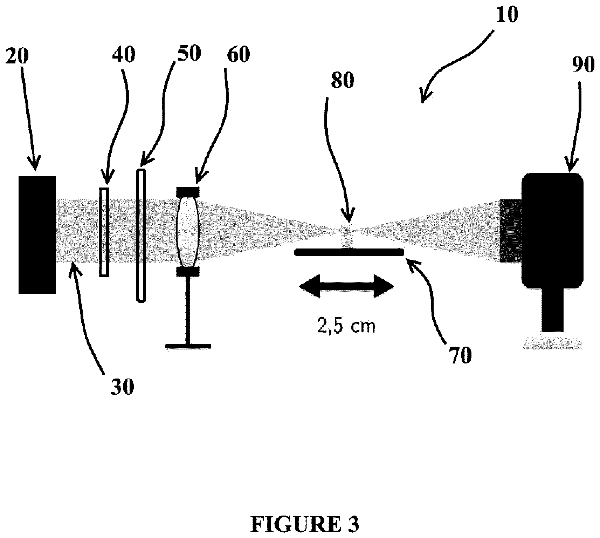

La technique du *Z-Scan* a pour objectif de mesurer l'indice de réfraction non linéaire et le coefficient d'absorption non linéaire d'un objet. Dans le cadre de la présente invention, seul l'absorption non linéaire a été étudiée qualitativement. Le principe consiste à déplacer l'échantillon de part et d'autre du point focal sur l'axe traversant les sommets des cônes de lumière engendrés par la focalisation du faisceau (voir Figure 3). L'intensité de la lumière qui a été non linéairement absorbée aux environs du point focal n'est pas collectée en fin de parcours. En traçant le graphique d'intensité de lumière collectée en fonction de la position de l'échantillon sur son parcours, on obtient un creux qui atteint son point le plus bas au point focal.

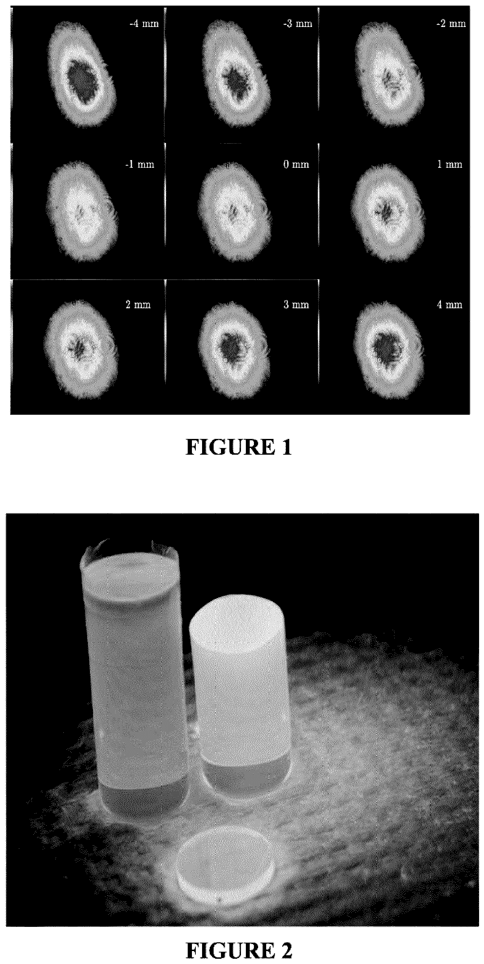

En se référant à la Figure 1 on remarque, en se rapprochant du point focal, que seule la section foncée au centre subit des changements. C'est un indice qui confirme qu'il s'agit bel et bien d'absorption à deux photons décelable par un *Z-Scan.* Ce phénomène survenant à haute intensité seulement (sections centrales foncées et blanches), les sections périphériques des images de couleurs gris clairs et noires ne sont pas transformées par le déplacement de l'échantillon.

### Exemples de Matrices hybrides :

Une nouvelle matrice de projection hybride binaires comprenant au moins deux types de (nano)particules et/ou molécules différentes sera décrit ci-après. Même si l'invention sera décrite en prenant pour exemple une ou plusieurs incarnations préférées, il est important de comprendre que ces incarnations préférées sont utilisées afin d'illustrer l'invention et non afin d'en limiter la portée.

### Description du montage et des équipements

La première étape de fabrication est le moulage des prismes ou des cylindres de plastique. Lorsque le mélange liquide contenant le méthacrylate de méthyle, les points quantiques, les ajouts métalliques et l'initiateur de polymérisation est fait, l'étape de pré-polymérisation peut être commencée. Par exemple, la température peut être de 90°C. Le montage nécessaire à sa réalisation est essentiellement composé d'une plaque chauffante reposant sur un support universel, d'un bain-marie rempli d'eau placé sur la plaque, d'un thermomètre indiquant la température de l'eau et de deux pinces universelles pour soutenir les échantillons immergés. Suite à l'étape de préchauffage, les blocs sont moulés dans un flacon cylindrique de verre ou dans les moules en aluminium en forme de prisme à base carrée. La technique utilisant les flacons cylindriques est plus facile à réaliser et donne des échantillons plus uniformes. Cependant, la manipulation des échantillons cylindriques est moins commode pour la caractérisation et les fioles, contrairement aux moules d'aluminium ne peuvent pas être utilisées plusieurs fois. Les moules sont par la suite placés dans une étuve à 75°C pour une polymérisation d'environ 24 h (voir annexe 1).

Les échantillons démoulés sont découpés en lame d'environ 3 mm à l'aide d'une scie à onglet à lame rotative de diamant. Par la suite, les lames sont polies sur une table à polir manuelle jusqu'à l'obtention d'un fini d'environ 1 $\mu$m.

### Exemple de fabrication des échantillons :

La fabrication de particules nano-émettrices telles que des points quantiques, nano-cristaux, ou autres, est connue de la personne versée dans l'art. Par exemple, on peut se référer aux articles suivants dont le contenu est incorporé ici par référence :

- Marie-Eve Lecavalier et al. "Water-dispersable colloidal quantum dots for the détection of ionizing radiation", Chem. Commun., 2013,49, 11629-11631;

- C.B. Murray, Synthesis and characterization of nearly monodisperse CdE (E = sulfur, selenium, tellurium) semiconductor nanocrystallites; J. Am. Chem. Soc., 1993, 115 (19), pp 8706-8715;

- Sam Beddar, Luc Beaulieu; "Scintillation Dosimetry", Chapter 19 (ISBN 9781482208993).

Les additifs particuliers utilisés sont obtenus commercialement :

- *Nanotubes de carbone* - Fournisseur: Raymor Nanotech <http://raymor.com/nanotech/>, Produit # : RN-02, Description: Nanotube de carbone, >50% C-SWNT;

- *Nanoparticules d'argent* - Fournisseur: Sigma-Aldrich <http://www.sigmaaldrich.com/canada-francais.html>, Produit # : 576832, Description: Silver nanopowder, <100 nm particule size.

Les étapes de fabrication des échantillons peuvent être les suivantes :

- Faire chauffer de l'eau dans un grand cristallisoir à 90°C (avec un agitateur);
- Préparer le mélange liquide de MMA (volatile), ajout métallique, points quantiques et le placer dans une fiole;
- Peser l'initiateur de polymérisation et l'ajouter au mélange liquide;
- Mettre le bouchon de la fiole et agiter jusqu'à ce que le mélange soit limpide;
- Serrer la fiole dans une pince universelle afin de l'immerger dans le cristallisoir à 90°C;
- Démarrer le compte à rebours du temps de préchauffage;
- Lorsque le temps de préchauffage est écoulé, retirer la fiole du cristallisoir;
- Ouvrir le bouchon pour laisser s'échapper le gaz;
- Refermer le bouchon solidement;
- Placer la fiole dans un petit bécher rempli d'eau; et
- Placer le bécher dans une étuve à 75°C pour une journée.

La découpe des échantillons peut être réalisée de la façon suivante :

- Retirer les panneaux de la hotte;
- Retirer le bouchon du récipient de la scie;
- Passer la lame de la scie sur un bloc d'affûtage si nécessaire;
- Fixer solidement l'échantillon dans l'étau;
- Ajuster la scie et le chariot à l'aide des déférents degrés de liberté;
- Fixer le chariot sur le rail;
- Ajuster la vitesse de la lame;
- Arroser la lame à l'aide d'une poire tout au long de la coupe;
- Guider manuellement la scie vers l'échantillon et la laisser couper;
- Arrêter la scie lorsque la coupe est terminée et la débrancher; et
- Rincer le récipient de la scie et replacer les panneaux de la hotte.

Le polissage des échantillons peut être réalisé de la façon suivante :

- Ouvrir les valves d'eau à l'entrée du laboratoire (robinet parallèle au tuyau);
- Déposer un papier abrasif sur la plaque à polir (commencer par un grain 600);
- Démarrer l'eau pour imbiber le papier;
- Placer le socle autour du papier pour le fixer;
- Démarrer la table tournante;
- Ajuster le débit d'eau;
- Déposer l'échantillon sur la table tournante en prenant soin de mettre les lignes de coupe perpendiculaire au rayon de la table;
- Tenir l'échantillon en place jusqu'à ce que les lignes de coupe soient disparues;
- Faire chauffer le porte échantillon sur la plaque chauffante avec un peu de paraffine;
- Lorsque la paraffine est fondue, placer le porte échantillon dans un bain marie et placer l'échantillon face polie à 600 vers le porte échantillon;
- Lorsque la cire a solidifié, insérer le porte échantillon dans le cylindre creux;
- Polir cette face à l'aide des papiers 600, puis 800, puis 1200;
- En suivant la même technique, fixer l'échantillon une nouvelle fois sur le porte échantillon, mais avec l'autre face vers le haut;
- Polir cette face à l'aide des papiers 600, puis 800, puis 1200;
- Retirer l'échantillon du porte échantillon;
- Placer un tapis à polir sur la polisseuse et verser quelques gouttes de solution abrasive de cérium sur le tapis;
- Ajouter un peu d'eau si nécessaire;
- Polir les deux faces; et
- Rincer les papiers sablés, le tapis à polir et laver la polisseuse.

**Montage de caractérisation**

La technique du *Z-Scan* ne demande pas beaucoup de matériel pour être réalisée. En référence à la figure 3, le montage de caractérisation (10) se compose seulement du laser pulsé Reg-A (20) au début du parcours qui émet de la lumière infrarouge (λ=788 nm) (30) traversant quelques miroirs (40) pour l'orienter vers la table optique, de filtres atténuateurs (50), d'une lentille focalisante (60) par exemple de 30 cm, d'un rail surmonté du porte échantillon (70) portant l'échantillon (80) et du profileur de faisceau (90). La puissance à la sortie du laser est d'environ 500 mW, la durée moyenne d'impulsion est d'approximativement 100 fs et la fréquence du laser est de 10 kHz. Il est nécessaire d'atténuer le signal pour ne pas brûler l'échantillon ou endommager le profileur de faisceau. Un schéma du montage, sans les filtres, est présenté à la Figure 3 pour simuler le déplacement de l'échantillon au travers du point focal.

**Résultats expérimentaux** :

Tableau 1 : Série d'échantillons :

| Numéro d'échantillon | Concentrations de points quantiques (μl/ml) | Concentration de nanoparticules d'Argent (mg/ml) | Concentrations de nanotubes de carbone (mg/ml) | Épaisseur (mm) ± 0,05 |
|---|---|---|---|---|
| 60 | 2,5 | 0 | 0 | 2,82 |
| 61 | 2,5 | 0,0195 | 0 | 2,80 |
| 62 | 2,5 | 0 | 0,0025 | 2,99 |
| 63 | 7,5 | 0 | 0 | 2,98 |
| 64 | 7,5 | 0,1005 | 0 | 4,03 |
| 65 | 7,5 | 0 | 0,00075 | 3,05 |

Pour chaque échantillon le temps de préchauffage est de 15 minutes, la masse d'initiateur de polymérisation est de 4 mg et il est à noter que les échantillons contiennent 4 ml de solution et sont complétés par du MMA filtré.

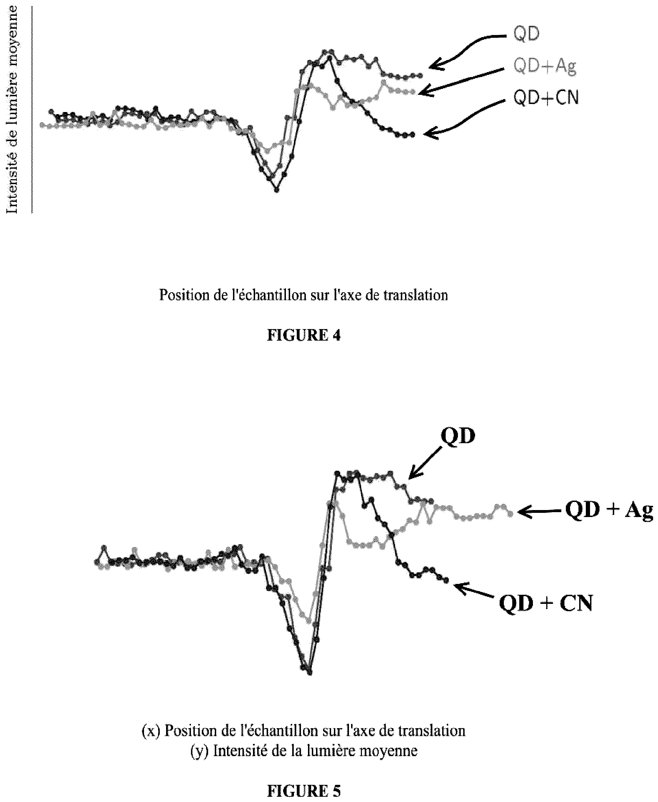

Une série de graphiques construits à l'aide des *Z-Scans* est présentée dans les Figures 4 à 8. Certains graphiques ont été omis puisqu'ils étaient trop bruyants ou parce que les échantillons avaient été endommagés par le laser durant le *Z-Scan.* Les axes des graphiques ne sont pas gradués. L'axe des abscisses montre le déplacement sur l'axe de translation de l'échantillon lors de son *Z-Scan.* Cependant, le seul point fiable est le point focal (environ le minimum des courbes) puisque le logiciel *Wink* était démarré manuellement, pas nécessairement au même moment pour chaque échantillon. Pour ce qui est de l'axe des ordonnées, il s'agit d'intensité moyenne de lumière en unité arbitraire. Les courbes sont toutes ramenées à la même échelle en *x* et en *y* pour des besoins comparatifs : pour l'analyse, seul le relatif nous intéresse. Les courbes ont donc été alignées par rapport à leur plateau de gauche (soit de la position 0 mm jusqu'au point focal) et par rapport à leur minimum.

Les courbes rouges (R) sont celles avec seulement des points quantiques (QD). Les courbes bleues (B) sont celles avec des points quantiques et des nanoparticules d'argent (QD+Ag). Les courbes pourpres (P) sont celles avec des points quantiques et des nanotubes de carbone (QD+CN).

Tableau 2 : Profondeurs relatives des creux par rapport à la courbe de l'échantillon contenant seulement des points quantiques pour les deux séries.

| | Série 1 (60, 61, 62) | | | Série 2 (63, 64, 65) | |
|---|---|---|---|---|---|
| | 10 mV | 13.5 mV | 20 mV | 20 mV | 24 mV |
| QD (R) | 1 | 1 | 1 | 1 | 1 |
| QD + Ag (B) | 0,49 | 0,53 | 1,93 | 2,91 | 3,51 |
| QD + NC (P) | 1,3 | 1,02 | 1,06 | 0,93 | 0,54 |

Tableau 3 : Seuil de fluorescence des échantillons

| Numéro de l'échantillon | Seuil de fluorescence (mW) ± 0,3 |
|---|---|
| 60 | 2,1 |
| 61 | 2,2 |

(suite)

| Numéro de l'échantillon | Seuil de fluorescence (mW) ± 0,3 |
|---|---|
| 62 | 2,1 |
| 63 | 1,2 |
| 64 | 1,3 |
| 65 | 1,3 |

**Commentaires sur les résultats - Causes de biais :**

Pour commencer, dans l'étape de fabrication des blocs, le problème principal restant à améliorer est l'homogénéité des échantillons. Après l'étape de préchauffage, les fioles sont agitées vigoureusement pour favoriser une répartition uniforme dans l'espace des particules. Cependant, lors du chauffage dans l'étuve, les points quantiques ont tendance à monter vers le haut de l'échantillon, rendant la première couche du cylindre plus concentrée en points quantiques. Pour pallier cet effet, lors de la coupe des échantillons, la première couche plus concentrée est rejetée. Le second problème en lien avec l'homogénéité des échantillons est la sédimentation des nanoparticules d'argent et l'agglomération des nanotubes de carbone. En effet, les nanoparticules d'argent ont tendance à se déposer dans le fond de la fiole. Encore une fois, la coupe des échantillons permet de corriger en partie cet effet. Pour ce qui est des nanotubes de carbone qui s'agglomèrent, aucune solution n'a été adoptée. Finalement, l'étape du polissage ne permet pas d'effacer toutes les irrégularités du matériau. Ce faisant, d'un échantillon à l'autre il peut y avoir des différences sur le relief des deux faces. Ces irrégularités étaient visibles sur les images générées par le profileur de faisceau. Nous avons donc fixé l'échantillon sur un socle amovible ayant un degré de liberté perpendiculaire au déplacement du rail. Il était alors possible de déplacer l'échantillon lorsque le laser traversait une zone qui semblait moins plane.

Un second problème a été réglé à l'aide de ce socle amovible. Lorsque les échantillons sont soumis à une trop forte puissance, ils subissent un dommage irréversible au point touché et aux alentours. Or, plusieurs *Z-Scan* ont été faits sur un même échantillon. Pour pouvoir effectuer le test sur un endroit différent de l'échantillon, il a été déplacé latéralement à l'aide du socle. Il est important de noter qu'aux environs du point focal, le profil du laser occupe approximativement seulement 1/100 de l'échantillon, permettant ainsi cette démarche de correction. Sur la Figure 1 il est possible de voir à plusieurs endroits sur l'image de petits cercles concentriques rappelant des patrons de diffraction. Il s'agit de poussières se trouvant sur certains des éléments du montage optique. On suppose que les poussières sur l'objectif de la caméra n'influencent pas trop les résultats puisque qu'elles sont les mêmes pour chacun des échantillons. Cependant, lors du traitement de données, les sections choisies pour l'analyse ne sont pas toutes exactement au même endroit sur les différentes images. L'impact de chaque poussière n'est donc pas identique à chaque image. De plus, les filtres choisis pour protéger le profileur de faisceau n'étaient pas toujours les mêmes. Les poussières des filtres n'ont donc pas été également réparties pour chaque échantillon.

Le logiciel de la caméra permet de capturer l'image du profil de faisceau en temps réel. Les images sont enregistrées à l'aide du logiciel *Wink* qui capture 35 images par seconde. Cette technique est très pratique pour faire un lien entre ce qui est visible à l'écran et les valeurs quantitatives d'intensité de lumière. Cependant, les fluctuations du laser dues à son instabilité intermittente ne peuvent pas être corrigées. Il s'avère donc difficile de faire la distinction entre une fluctuation du laser et un effet non linéaire, puisque ceux-ci sont d'amplitudes semblables. Lors de l'interprétation des résultats, il est possible de contourner cet effet en sachant approximativement à quel endroit sur l'enregistrement le point focal se trouve.

La sélection de la zone d'intérêt sur le logiciel *ImageJ* pourrait entraîner une cause de biais puisque la section n'est pas identique pour chaque échantillon. Une zone d'intérêt de taille identique ne serait pas fonctionnelle puisque d'une mesure à l'autre, le profil du faisceau laser est changeant. Cependant j'ai procédé à un contrôle de vérification en comparant plusieurs zones pour me rendre compte du peu d'impact occasionné par la sélection pour autant qu'elle soit raisonnable.

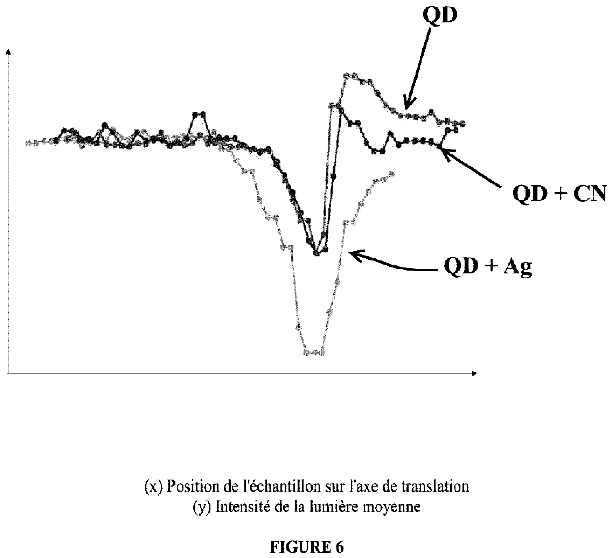

Lors de l'interprétation des résultats, il est difficile de distinguer la différence entre un creux dû à un effet non linéaire et une altération du matériau. En effet, en regardant les graphiques des Figures 6, 7 et 8 il est possible que les creux prononcés soient causés par l'atteinte du seuil de dommage du matériau et non pas par un effet non linéaire. Les échantillons contenant les nanoparticules d'argent sont ceux qui génèrent les creux les plus importants à haute puissance. L'argent pourrait absorber linéairement la lumière et la réémettre en chaleur, altérant ainsi le matériau plus rapidement et laissant croire à un effet non linéaire plus grand. Le plastique lui-même ne peut pas avoir engendré des dommages sur l'échantillon puisqu'il n'absorbe pas à la longueur d'onde du laser.

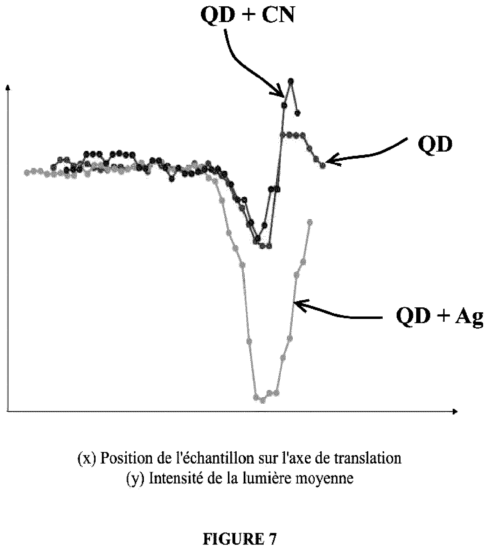

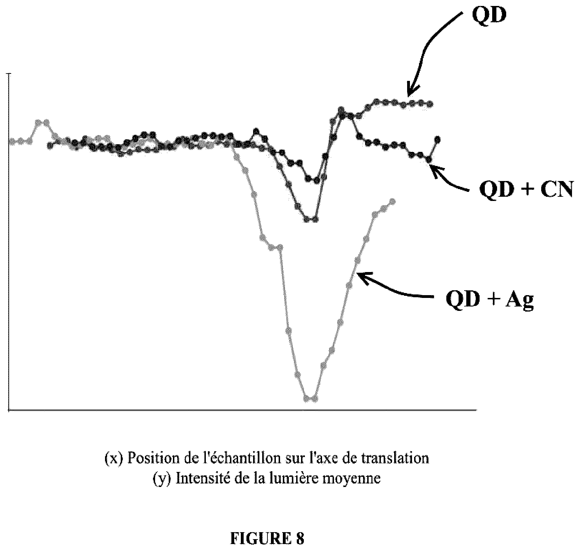

Finalement, l'épaisseur des blocs ne peut pas être prise en compte par la méthode. Or, en se référant au Tableau 1, on remarque que les échantillons n'ont pas exactement la même épaisseur. Un échantillon en particulier, celui contenant les nanoparticules d'argent de la série 2, a environ 1 mm de plus d'épaisseur. Dans les graphiques des Figures 7 et 8, c'est celui qui génère les creux les plus importants. On pourrait alors penser que l'épaisseur est en cause et qu'elle est directement corrélée avec l'absorption non linéaire. Cependant, la courbe de l'argent dans le graphique de la Figure 6 génère également un grand creux alors que cet échantillon n'est pas plus épais que les autres. L'idéal serait tout de même d'avoir des épaisseurs semblables pour chacun des échantillons, mais le polissage insère un biais.

**Analyse**

Comme on peut voir au Tableau 1, la série d'échantillons 1 (60, 61, 62) possède la même concentration de points quantiques dans chacun de ses éléments. Idem pour la série 2 (63, 64, 65), mis à part le fait qu'elle est uniformément plus concentrée en points quantiques. Il a été choisi de procéder ainsi pour pouvoir comparer les échantillons sans métal et ceux qui en contiennent.

Les graphiques présentés sont une représentation visuelle du phénomène d'absorption non linéaire. Il est intéressant de remarquer que peu importe la valeur de puissance, les échantillons contenant les nanotubes de carbone génèrent des courbes très semblables à celles des points quantiques seuls, suggérant ainsi l'absence d'effet supplémentaire. Les nanotubes de carbone utilisés dans les échantillons n'étaient pas complètement métalliques et il est probable que l'agrégation des particules ait bloqué un effet quelconque. Pour synthétiser les cinq graphiques des Figures 4 à 8, le Tableau 2 présente la profondeur relative du creux de chaque courbe par rapport à l'échantillon témoin (points quantiques seuls). Seule la profondeur relative, c'est-à-dire mesurée par rapport au plateau de gauche du graphique, nous intéresse puisque les paramètres de l'expérience rendaient le travail en absolu quasiment irréalisable. Il est à noter que la remontée des plateaux après le passage au point focal demeure sans explication. Toutefois, le fait que les paliers de droite soient plus bruyants que ceux de gauche vient suggérer qu'il y a eu un endommagement du matériau. Lorsque l'échantillon se déplaçait sur le rail en sens inverse de sa trajectoire tracée sur les graphiques, le palier de gauche était celui qui était supérieur. En d'autres termes, par rapport au déplacement de l'échantillon, l'intensité de la lumière était toujours plus faible de la position 0 mm au point focal et toujours plus forte du point focal à la position 25 mm.

Aux graphiques des Figures 4 et 5, soit à relativement basses puissances, on remarque que l'échantillon contenant les nanoparticules d'argent génère des creux moins profonds. En se fiant au Tableau 2, on note que la profondeur relative des creux des échantillons contenant l'argent est deux fois moins grande que pour les creux des points quantiques seuls. Il y a tout de même présence d'absorption à deux photons à ces puissances puisque les creux restent visibles sur les graphiques. Cependant, aux graphiques des Figures 6 à 8, soit à relativement hautes puissances, on remarque l'effet inverse. Ce sont les échantillons contenant les nanoparticules d'argent qui obtiennent des profondeurs relatives étant jusqu'à trois fois et demie plus intense que le témoin.

Finalement, en se fiant au Tableau 3 qui présente le seuil de fluorescence des échantillons mesuré à l'œil nu, on conclut rapidement que pour une concentration de points quantiques donnée, le seuil de fluorescence est le même.

À la lumière de toutes ces constatations, il est possible de suggérer que la présence de nanoparticules d'argent a un effet, quel qu'il soit, sur les propriétés du matériau. Cependant, puisque les seuils de fluorescence sont semblables pour chacun des échantillons et que si l'effet d'absorption non linéaire était réellement amplifié par les nanoparticules d'argent, il le serait également à basse puissance pourvu qu'il y ait absorption à deux photons, il est tendance de penser que les creux plus profonds des graphiques des Figures 6 - 8 sont dus à un dommage causé au matériau. Ce dommage pourrait constituer une application pratique intéressante, permettant d'inscrire des gravures dans du PMMA à plus basse puissance. Par exemple, selon les paramètres de l'expérience du graphique 3 (Figure 6), pour une puissance donnée de 20 mW, seul l'échantillon contenant l'argent a été engravé. Toutefois, indépendamment de l'interprétation des résultats, il est probable qu'en changeant les concentrations et en raffinant la technique expérimentale de pouvoir observer des effets accrus en présence d'ajouts métalliques. La concentration de ces ajouts métalliques influence la distance inter-particules. Ainsi, ce paramètre pourrait être la clé d'augmentation d'absorption non linéaire que ce soit pour les nanotubes de carbone ou les nanoparticules d'argent. De plus, il n'est pas exclu que le phénomène d'absorption non linéaire pourrait être accru par la présence de nanoparticules d'argent seulement à partir d'un certain seuil de puissance.

Pour améliorer la méthode, il serait avantageux de pouvoir mesurer les fluctuations du laser à l'aide d'une déviation partielle du faisceau vers une photodiode permettant de choisir adéquatement les périodes de prises de mesures. De plus, il serait intéressant de développer une manière de synchroniser le rail de déplacement avec le logiciel de mesure pour que toutes les courbes aient exactement le même déplacement en fonction du temps, standardisant ainsi l'axe des abscisses.

Même si l'effet important créé par les échantillons contenant les nanoparticules d'argent visible dans les graphiques 3, 4 et 5 n'est pas une augmentation de l'absorption non linéaire, il semble qu'un effet soit bel et bien présent. D'autres mesures et la fabrication de nouvelles séries d'échantillons pourraient aider à mettre en lumière la nature de ce phénomène.

## Système de production volumétrique

Nous décrivons ci-après des expériences réalisées pour obtenir une photoluminescence à deux photons dans des matrices de PMMA (plexiglas) dopé par des points quantiques. Nous établissons aussi des requis fonctionnelles d'un système de projection et les étapes requises pour la mise œuvre du système de projection volumétrique.

### *Résultats des tests*

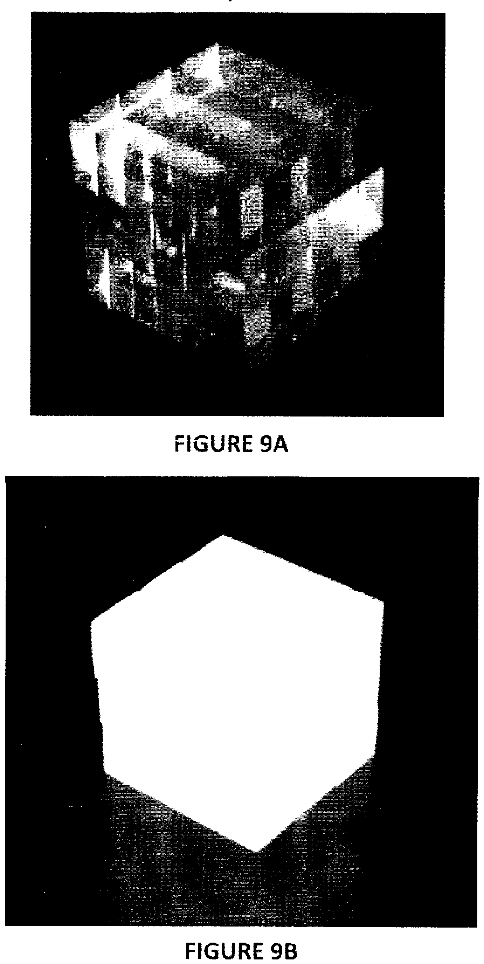

La première étape consistait à introduire dans un PMMA des points quantiques. Nous avons fabriqué ainsi des réglettes de PMMA dopé avec des points quantiques selon la méthode décrite ici. La figure 9 montre l'arrangement de plusieurs réglettes de PMMA en cube (Fig. 9A) et le même arrangement excité par une lumière UV (Fig. 9B). L'excitation UV montre la présence de photoluminescence ce qui est attribuable à la présence de points quantiques dans le PMMA.

La seconde étape consistait à obtenir de la photoluminescence non pas à partir de la lumière UV mais plutôt avec de la lumière infrarouge (IR) via un processus d'absorption à deux photons. Tout d'abord, les résultats avec le premier laser YAG (1064 nm) en continue furent décevant. En effet, le PMMA se mettait à fondre à une certaine intensité sans pour autant produire de la photoluminescence. En utilisant un laser YAG pulsé (5-7 ns) à une fréquence de 10 Hz, nous avons pu observer de la photoluminescence mais encore ici le PMMA était endommagé.

Nous avons utilisé dans un troisième temps un laser Titane-Saphir ayant les spécifications suivantes:

**Tableau 4 :**

| Longueur d'onde | 789 nm |
|---|---|
| Taux de répétition | 250 kHz |
| Largeur du pulse | 82 femtosecondes |
| Puissance moyenne minimale | < 10 mW |

Nous avons de plus utilisé un objectif de microscope pour focaliser la lumière. Les spécifications de l'objectif sont les suivantes:

**Tableau 5 :**

| Magnification | 5x |
|---|---|
| Longueur focale | 25 mm |
| Ouverture numérique | 0.1 |
| Pupille d'Entrée | 9 mm |

Dans tous les tests suivants, la photoluminescence n'est observable qu'au foyer du laser, il n'y a pas de traîné luminescente avant ou après le foyer. À puissance minimale moyenne, par exemple < 10mW, en mode statique (aucun balayage), le faisceau endommage l'échantillon, mais on observe de la photoluminescence. On ne peut pas trouver d'intensité minimale requise (seuil) en mode statique avec ces tests puisque qu'on observe déjà une photoluminescence. Des tests subséquents avec des filtres neutres devront être faits pour déterminer la limite inférieure de l'intensité requise pour la photoluminescence.

Toujours à puissance minimale, par exemple < 10mW, mais en déplaçant le faisceau à une vitesse de 1 mm/s, on observe de la photoluminescence et il n'y a aucun dommage permanent d'observable dans le PMMA.

En se déplaçant toujours à 1 mm/s, il est possible d'augmenter la puissance jusqu'à environ 35 mW de puissance moyenne avant de voir des dommages permanent. Il est possible d'augmenter la puissance > 50 mW, et n'observer aucun dommage si on augmente la vitesse de balayage plus grande que 1 mm/s.

Certains dommages peuvent être dus aux effets thermiques induits par le laser à impulsions brèves. Les dommages permanents gravés dans le PMMA ont été mesurés à l'aide d'un microscope et ont une largeur de 35 microns. Il ne faut pas confondre effets thermique et effets non-linéaires. En effet, les effets thermiques s'accumulent pour ainsi produire un échauffement du plastique et produire des défauts permanents. Les effets non-linéaires ou la photoluminescence est produite localement et si et seulement si l'intensité du faisceau est suffisante. La zone de photoluminescence est localisée à un endroit. Cette zone ou volume est défini par l'intensité du confinement laser au foyer de l'objectif de microscope.

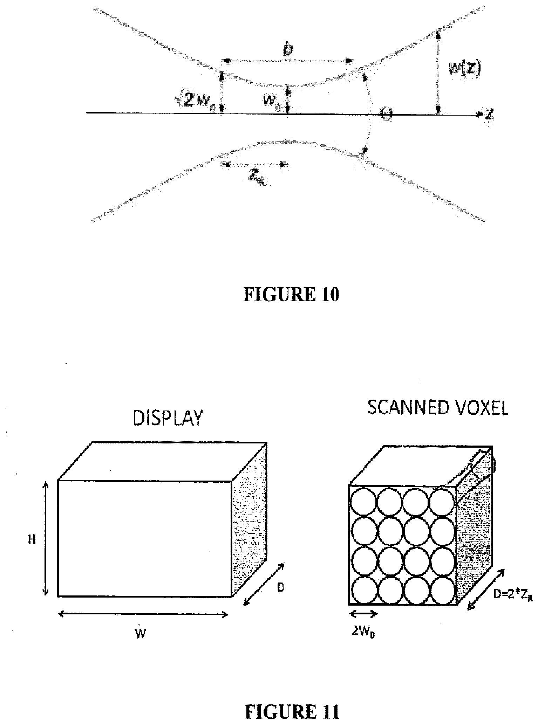

Dans un premier temps, nous faisons l'hypothèse que le volume de la zone fluorescente est confiné autour de la zone focale ou le faisceau laser est confiné. La distance axiale est limitée à la zone de Rayleigh (b) et l'étendu transverse est limité par le 'waist' (W0) du faisceau tel qu'illustrer à la figure 10. Ces distances sont définies par les équations suivantes :

$$2Z_R = b = \frac{2\pi W_o^2}{\lambda}$$

$$2W_o = \frac{4\lambda}{\pi.\theta} = \frac{4\lambda}{\pi}F\#$$

Selon ces équations, la zone de photoluminescence axiale est plus grande que la zone latérale. En utilisant que l'angle $\theta$ est égale à l'inverse nombre-f (F#) de la lentille de focalisation, nous obtenons un Wo de :

$$2W_0 = \frac{4\lambda}{\pi} * (fnumber) = \frac{4f\lambda}{\pi d} = \frac{4*25mm*789nm}{\pi(9mm)} = 2,79 microns$$

Pour la dimension axiale nous avons approximativement de 62 um. Ceci indique que la zone fluorescente devrait être très allongée.

Nous constatons toutefois ce n'est pas le cas. Plusieurs éléments peuvent expliquer cette situation. Il est possible que la matrice de PMMA diffuse la lumière, ce qui augmente la zone que nous percevons en augmentant ainsi la taille artificiellement de la zone fluorescente. Il est également possible que la lumière fluorescente émise par la zone excitée par le laser excite à son tour des points quantiques (excitation à 1 photon) qui fluorescent en augmentant ainsi la taille de la zone fluorescente visible. Une combinaison des deux facteurs mentionnés pourrait aussi expliquer la situation. Quoiqu'il en soit, cette situation commande d'examiner dans l'avenir le couplage autour de la zone excitée par le laser (cross talk entre les *voxels).*

### Exemple de requis fonctionnel pour le projecteur

En se basant sur l'hypothèse que le volume de photoluminescence est confiné à la zone focale, nous pouvons donc établir que pour obtenir un volume de photoluminescence cubique, il faudra balayer latéralement le *voxel* sur une dimension 'b'. Ceci a pour conséquence qu'il sera préférentiellement nécessaire d'avoir un mécanisme de balayage du faisceau en XY afin de « remplir » le *voxel*. Le balayage pourrait se faire en *'raster scan'* telle qu'illustré à la Figure 11 ou alors via un balayage circulaire qui est plus simple à intégrer au système.

Pour un écran de volume tel qu'illustrée sur la Figure 11, nous pouvons définir la dimension 'b' en déterminant le nombre de pixels dans la dimension D (profondeur). Sachant la longueur d'onde du laser (1), nous pouvons alors déterminer la taille Wo du faisceau requis. Le nombre d'élément de balayage N dans le *voxel* (micro-balayage) est donné par le ratio $b/2W_0$ qui est égale à 2F#. Ce F# détermine approximativement le requis de la lentille de balayage du système (*scan lens*).

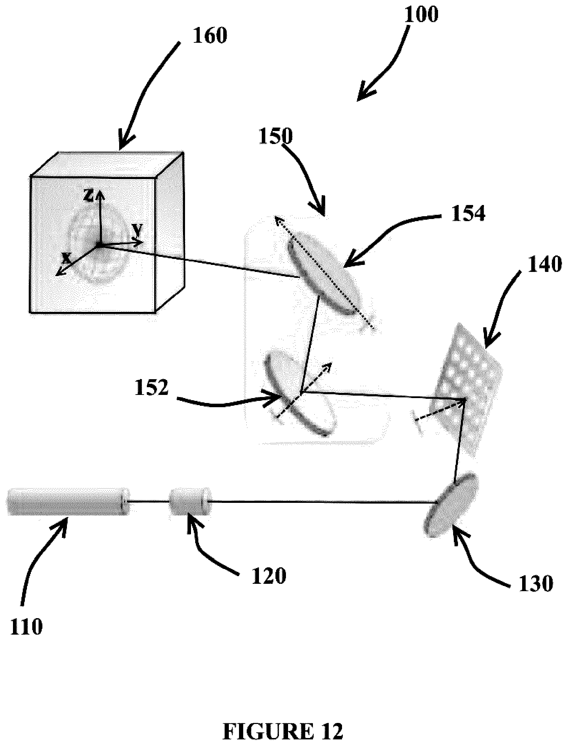

En se basant sur des systèmes similaires, le système de projection est composé de 3 sous-systèmes de balayage. Un balayage X-Y qui viendrait positionner le foyer du faisceau pour chaque plan transversal de l'image. Ce type de balayage serait fait probablement par deux miroirs galvanométriques. Le deuxième type de balayage se fera en profondeur (Z). Pour cet axe il s'agira probablement d'un modulateur spatial à cristaux liquides (SLM) tel qu'illustré à la Figure 12. Tel que déjà mentionné, le dernier type de balayage sera utilisé pour remplir le *voxel*. Ce type de balayage pourra être fait par un prisme rotatif mais d'autres types de balayage pourra être considéré. Le découplement du balayage en trois parties permet d'augmenter la fréquence de rafraîchissement totale du système. Le système de projection (100) décrit à la figure 12 comprend un laser-IR (110) projetant la lumière sur un premier modulateur (120), puis vers un miroir (130) déviant la lumière vers le modulateur spatial à cristaux liquide (140). Au sortir du modulateur spatial (140), la lumière est traitée par le scanner de balayage Y-Y (150) et ses miroirs galvanométriques (152-154) avant d'être projetée sur l'écran volumique (160).

La vitesse de balayage du volume est un des critères limitant du système en termes de nombre de *voxels* modulables à une vitesse de 30 images/secondes. En se basant sur une valeur d'environ 150 millions de *voxels* atteignable dans d'autre système de balayage 3D (HiResFELIX), on peut poser comme résolution 3D du système de 500x500x500 *voxels* (égale à 125 millions). De cette résolution et de la taille du système on peut déterminer la taille du *voxel* désiré, celui-ci fixe la taille de la zone de rayleigh $(Z_R)$ qui par la suite nous impose une taille du *beam waist* $(2*W_0)$ selon les équations décrites ci-haut. Le nombre de micro-balayage est calculé en divisant l'aire du *voxel* par la taille du *beam waist* requis. Finalement, en utilisant les valeurs d'intensité (Watts/mm²) calculées pour nos tests avec le laser Ti-Saphire et l'aire du nouveau *beam waist* requis pour l'affichage choisi, nous pouvons déterminer la puissance moyenne requise du laser pour cette nouvelle dimension du faisceau laser requise.

$$I_{moy} = \frac{P_{moy}}{Airefaisceau}$$

$$P_{moy} = I_{moy} * AireFaisceau = I_{moy} * \frac{\pi(2W_0)^2}{4}$$

La valeur Imoy=1.63e$^{+3}$ Watt/mm², nécessaire à la photoluminescence, a été calculée à partir des données prise en laboratoire ($P_{moy}$ = 0,01 W et $2W_0$=2,79 microns). Cette valeur n'est pas nécessairement le minimum et d'autres valeurs pourraient être atteintes.

La distance entre le système de balayage et l'affichage détermine la longueur focale de la lentille de balayage. Le f-number (f/#) est défini comme le ratio entre la longueur focale (f) et le diamètre d'une lentille (D). Wo est proportionnelle au f# selon l'équation suivante.

$$2W_0 = \frac{4\lambda}{\pi} * f\# = \frac{4\lambda}{\pi} * \frac{f}{D}$$

Avec cette équation, la taille du *beam waist* (Wo) et la longueur focale, nous pouvons déterminer le diamètre minimal de la lentille de balayage. Finalement, puisque les balayages en XY et Z sont découplés, la valeur « balayage XY » donne le nombre de point transversaux qui doivent être modulés pour obtenir un plan à 30 images secondes ce qui donne directement la fréquence de modulation et balayage pour le système.

Les tableaux 6 et 7 suivants résument les paramètres calculés d'un éventuel système de projection 3D.

**Tableau 6 :**

| | | | |
|---|---|---|---|
| Intensité moyenne minimum (W/mm²) | 1,63. 10³ | | |
| | W | H | D |
| Taille de l'écran (*display*) (m) | 1 | 1 | 1 |
| Résolution (nombre de pixels) | 500 | 500 | 500 |
| Taille Voxels (microns) | 2000 | 2000 | 2000 |
| Nombre de voxels | 125.000.000 | | |
| $Z_R$ : Zone de Rayleigh requise ($\mu$m) | 2000 | | |
| $2W_0$ : taille du rayon requis ($\mu$m) | 31,69 | | |
| Nombre de balayage / voxel | 63,1 * 63,1 | | |
| Puissance moyenne (W) | 1,291 | | |

**Tableau 7:**

| | |
|---|---|
| Scanning | |
| Distance laser - Display (m) | 0,5 |
| Focale Scan - Lentille (?) | 0,5 |
| F-number (f/#) | 31,55 |
| Min. diamètre scan lens (mm) | 15,85 |
| Scan XY : nombre point / sec à 30 fps | 7.5000.000 |
| Scan XY fréquence modulation (MHz) | 7,5 |

La puissance moyenne laser calculée dans le tableau 6 précédent est de 1.291 W ce qui est assez fort. Afin de réduire la puissance, on peut poser un volume de 50x50x50 cm ce qui diminuerait de moitié la puissance requise. Une autre solution est de combiner deux lasers afin de produire l'intensité requise. Aussi, il faut garder en tête que les spécifications d'intensité lumineuse minimale requises pour la photoluminescence n'ont pas été déterminées et nous utilisons donc la puissance minimale du laser de test (10mW) qui a produit de la luminescence dans nos tests. De plus, ces calculs sont pour un système monochromatique. Un système couleur RGB pourrait être préférentiellement composé d'un laminé de couches RGB successives ce qui diminuera par 3 le requis pour ZR. La puissance requise sera aussi coupée par trois au profit d'une augmentation de la vitesse de balayage en Z par le SLM. La figure 5 de l'article Downing - "A Three-Color, Solid State, Three-Dimensional Display", Science, 1996, p 5279-1185 présente un concept de ce type de display laminé.

Les points quantiques peuvent être utilisés pour générer des effets non linéaires lorsqu'ils sont soumis à de fortes puissances. Pour aspirer à des applications pratiques, il est préférable de les emprisonner dans une structure solide plutôt que de les laisser en solution où leur contenu toxique aurait plus de chance d'être exposé aux utilisateurs. Conséquemment, des points quantiques ont été confinés dans une matrice de plastique (tel que du polyméthacrylate de méthyle). Des nanotubes de carbone et des nanoparticules d'argent ont été joints à certains des échantillons. L'objectif était de pouvoir comparer l'absorption à deux photons des échantillons à l'aide d'un Z-Scan. Cette technique mesure l'intensité de lumière du laser qui traverse l'échantillon lors de son déplacement à travers le point focal.

Lorsque les points quantiques ont été placés dans le faisceau focalisé du laser, il était possible de voir de la fluorescence orange à l'oeil nu. Suite à la prise de mesures, nous avons observé que la présence de nanotubes de carbone ne semblait pas affecter l'absorption non linéaire. Nous avons cependant observé que la présence de nanoparticules d'argent pourrait augmenter cet effet jusqu'à quatre fois. Toutefois, nous avons également constaté que le seuil de dommage du matériau était d'approximativement 30 mW, alors que le seuil de fluorescence était de 2 mW. Ces deux valeurs étant relativement proches, l'absorption non linéaire et le dommage du matériau sont difficilement distinguables.

Bien qu'elle ait été décrite à l'aide d'une ou plusieurs incarnations préférées, il faut bien comprendre que la présente invention peut être utilisée, employée et/ou incarnée dans une multitude d'autres formes. Ainsi, les revendications qui suivent doivent être interprétées de façon à inclure ces différentes formes tout en restant à l'extérieur des limites fixées par l'art antérieur.

**Revendications**

1. Une matrice de projection hybride comprenant un support solide transparent à la lumière et une combinaison synergique d'au moins deux types différents de particules à l'intérieur dudit support solide, dont :

   (1) un premier type de particules comprenant des particules nano-émettrices adaptées pour absorber de façon non-linéaire un ou deux photons et émettre une lumière visible ; et
   (2) un second type de particules constitué d'au moins un additif rehaussant l'absorption non-linéaire à un ou deux photons et l'émission de lumière visible par les particules nano-émettrices, permettant ainsi d'intensifier et/ou modifier la lumière émise par les particules nano-émettrices, ledit additif comprenant des nanoparticules d'or, des nanoparticules d'argent, des nanoparticules semiconductrices, de la nanocellulose, des nanotubes de carbone, des matériaux bidimensionnels, du graphène, ou des polymères conducteurs et/ou semi-conducteurs.

2. La matrice selon la revendication 1, dans laquelle le support solide transparent à la lumière comprend un support polymérique, le support polymérique comprenant du polyméthacrylate de méthyle.

3. La matrice selon l'une quelconque des revendications 1 ou 2, dans laquelle les particules nano-émettrices comprennent des points quantiques, des fils ou tiges quantiques, des puits quantiques, des anneaux quantiques, des nano-cristaux, des nanoplaquettes, des molécules fluorescentes, des fluorophores, et/ou des phosphores.

4. Un procédé de fabrication d'une matrice de projection hybride, le procédé comprenant les étapes suivantes :

   a) mélanger dans une solution permettant la synthèse d'un support solide transparent à la lumière, une première quantité donnée d'un premier type de particules comprenant des particules nano-émettrices et une seconde quantité donnée d'un second type de particules constitué d'au moins un additif, ledit additif comprenant des nanoparticules d'or, des nanoparticules d'argent, des nanoparticules semiconductrices, de la nanocellulose, des nanotubes de carbone, des matériaux bidimensionnels, du graphène, ou des polymères conducteurs et/ou semi-conducteurs; et
b) solidifier le mélange obtenu pour obtenir la matrice.

**5.** Le procédé selon la revendication 4, dans lequel la solution permettant la synthèse du support solide transparent à la lumière comprend un monomère qui une fois polymérisé forme un support polymérique transparent à la lumière.

**6.** Le procédé selon la revendication 5, comprenant les étapes suivantes :

a1) mélanger la solution de monomères permettant la synthèse du support polymérique, la première quantité donnée du premier type de particules comprenant les particules nano-émettrices et la seconde quantité donnée du second type de particules constitué d'au moins un additif ;
a2) insérer un initiateur de polymérisation dans le mélange ; et
bl) laisser polymériser le mélange obtenu pour obtenir la matrice.

**7.** Le procédé selon la revendication 5 ou 6, dans lequel le support polymérique comprend du polyméthacrylate de méthyle.

**8.** Le procédé selon l'une quelconque des revendications 5 à 7, dans lequel les particules nano-émettrices comprennent des points quantiques, des fils ou tiges quantiques, des puits quantiques, des anneaux quantiques, des nano-cristaux, des nanoplaquettes, des molécules fluorescentes, des fluorophores, et/ou des phosphores.

**9.** Un système de projection volumétrique d'imagerie en trois dimensions (3D), le système comprenant :

(1) une source émettrice de photons; et
(2) la matrice de projection hybride telle que définie dans l'une quelconque des revendications 1 à 3, la matrice étant située en aval de la source émettrice afin de recevoir les photons depuis la source émettrice, la matrice émettant alors une lumière visible afin de créer une image en trois dimensions.

**10.** Le système selon la revendication 9, dans lequel le laser produit un balayage pour remplir un voxel.

**11.** Le système selon la revendication 10, dans laquelle le laser produit un balayage découplé en trois parties permettant d'augmenter une fréquence de rafraîchissement totale du système, ledit balayage comprenant :

(1) un premier balayage X-Y pour positionner un foyer du faisceau pour chaque plan transversal d'une image;
(2) un deuxième balayage Z pour positionner un foyer du faisceau pour chaque plan en profondeur de l'image; et
(3) un troisième balayage pour compléter une image et remplir un voxel.

**12.** Une méthode de projection volumétrique d'imagerie en trois dimensions (3D), la méthode consistant projeter des photons sur la matrice de projection hybride telle que définie dans l'une quelconque des revendications 1 à 3, la matrice émettant alors de la lumière visible pour former une image en trois dimensions.

**13.** La méthode selon la revendication 12, dans laquelle le laser produit un balayage découplé en trois parties permettant d'augmenter une fréquence de rafraîchissement totale du système, ledit balayage comprenant :

(1) un premier balayage X-Y pour positionner un foyer du faisceau pour chaque plan transversal d'une image;
(2) un deuxième balayage Z pour positionner un foyer du faisceau pour chaque plan en profondeur de l'image; et
(3) un troisième balayage pour compléter une image et remplir un voxel.

**14.** La matrice selon l'une quelconque des revendications 1 à 3, dans laquelle la matrice est sous forme d'une lame ayant une épaisseur comprise entre 2 et 5 mm.

**15.** La matrice selon la revendication 14, dans laquelle la lame polie a une surface polie.


**Patentansprüche**

**1.** Hybride Projektionsmatrix, umfassend einen lichtdurchlässigen festen Träger und eine synergistische Kombination von mindestens zwei verschiedenen Arten von Teilchen innerhalb des festen Trägers, darunter:

(1) einen ersten Partikeltyp, der Nanoemitterpartikel umfasst, die geeignet sind, ein oder zwei Photonen nichtlinear zu absorbieren und sichtbares Licht zu emittieren; und

(2) eine zweite Art von Teilchen, die aus mindestens einem Additiv besteht, das die nichtlineare Ein- oder Zwei-Photonen-Absorption und die Emission von sichtbarem Licht der nanoemittierenden Teilchen verstärkt, wodurch das von den nanoemittierenden Teilchen emittierte Licht intensiviert und/oder modifiziert wird, wobei das Additiv Gold-Nanopartikel, Silber-Nanopartikel, Halbleiter-Nanopartikel, Nanocellulose, Kohlenstoff-Nanoröhrchen, zweidimensionale Materialien, Graphene oder leitfähige und/oder halbleitende Polymere umfasst.

2. Matrix nach Anspruch 1, wobei der lichtdurchlässige feste Träger einen Polymerträger umfasst, wobei der Polymerträger Polymethylmethacrylat umfasst.

3. Matrix nach einem der Ansprüche 1 oder 2, wobei die Nanoemitterpartikel Quantenpunkte, Quantendrähte oder -stäbchen, Quantentöpfe, Quantenringe, Nanokristalle, Nanoplättchen, fluoreszierende Moleküle, Fluorophore und/oder Phosphore umfassen.

4. Verfahren zur Herstellung einer hybriden Projektionsmatrix, wobei das Verfahren die folgenden Schritte umfasst:

a) Mischen in einer Lösung, die die Synthese eines lichtdurchlässigen festen Trägers ermöglicht, einer ersten bestimmten Menge eines ersten Typs von Teilchen, die Nanoemitterteilchen umfassen, und einer zweiten bestimmten Menge eines zweiten Typs von Teilchen, die aus mindestens einem Additiv bestehen, wobei das Additiv Gold-Nanopartikel, Silber-Nanopartikel, Halbleiter-Nanopartikel, Nanocellulose, Kohlenstoff-Nanoröhrchen, zweidimensionale Materialien, Graphene oder leitfähige und/oder halbleitende Polymere umfasst; und
b) Verfestigung der daraus resultierende Mischung, um die Matrix zu erhalten.

5. Verfahren nach Anspruch 4, wobei die Lösung zur Synthese des lichtdurchlässigen festen Trägers ein Monomer umfasst, das nach seiner Polymerisation einen lichtdurchlässigen polymeren Träger bildet.

6. Verfahren nach Anspruch 5, umfassend die folgenden Schritte:

AI) Mischen der Monomerlösung, die die Synthese des polymeren Trägers ermöglicht, der ersten bestimmten Menge des ersten Partikeltyps, der die Nanoemitterpartikel umfasst, und der zweiten bestimmten Menge des zweiten Partikeltyps, der aus mindestens einem Additiv besteht;
A2) Einbringen eines Polymerisationsinitiators in die Mischung; und
B1) Die Mischung polymerisieren lassen, um die Matrix zu erhalten.

7. Verfahren nach Anspruch 5 oder 6, wobei der polymere Träger Polymethylmethacrylat umfasst.

8. Verfahren nach einem der Ansprüche 5 bis 7, wobei die Nanoemitterpartikel Quantenpunkte, Quantendrähte oder -stäbchen, Quantentöpfe, Quantenringe, Nanokristalle, Nanoplättchen, fluoreszierende Moleküle, Fluorophore und/oder Phosphore umfassen.

9. Ein dreidimensionales bzw. volumetrisches, bildgebendes Projektionssystem, wobei das System folgendes umfasst:

(1) eine Photonen emittierende Quelle; und
(2) die hybride Projektionsmatrix nach einem der Ansprüche 1 bis 3, wobei die Matrix unterhalb bzw. stromabwärts der Emissionsquelle angeordnet ist, um Photonen von der Emissionsquelle zu empfangen, wobei die Matrix dann sichtbares Licht emittiert, um ein dreidimensionales Bild zu erzeugen.

10. Das System nach Anspruch 9, wobei der Laser einen Abtastvorgang produziert, um ein Voxel zu füllen.

11. System nach Anspruch 10, wobei der Laser ein dreifach entkoppeltes Abtasten produziert, um eine Gesamtauffrischungsrate des Systems zu erhöhen, wobei die Abtastung folgendes umfasst:

(1) einen ersten X-Y-Abtastvorgang zur Positionierung eines Strahlfokus für jede Querebene eines Bildes;
(2) einen zweiten Z-Abtastvorgang zur Positionierung eines Strahlfokus für jede Tiefenebene des Bildes; und
(3) einen dritten Abtastvorgang, um ein Bild zu vervollständigen und ein Voxel zu füllen.

12. Volumetrisches Projektionsverfahren zur dreidimensionalen (3D) Abbildung, wobei das Verfahren das Projizieren von Photonen auf die hybride Projektionsmatrix gemäß einem der Ansprüche 1 bis 3 umfasst, wobei die Matrix dann sichtbares Licht emittiert, um ein dreidimensionales Bild zu erzeugen.

13. Verfahren nach Anspruch 12, wobei der Laser eine entkoppelte dreiteilige Abtastung erzeugt, um eine Gesamtauffrischungsrate des Systems zu erhöhen, wobei die Abtastung folgendes umfasst:

(1) einen ersten X-Y-Abtastvorgang zur Positionierung eines Strahlfokus für jede Querebene eines Bildes;
(2) einen zweiten Z-Abtastvorgang zur Positionierung eines Strahlfokus für jede Tiefenebene des Bildes; und
(3) einen dritten Abtastvorgang, um ein Bild zu vervollständigen und ein Voxel zu füllen.

14. Matrix nach einem der Ansprüche 1 bis 3, wobei die Matrix in Form einer Klinge einer Stärke zwischen 2 und 5 mm vorliegt.

15. Matrix nach Anspruch 14, wobei die polierte Klinge eine polierte Oberfläche aufweist.

## Claims

1. A hybrid projection matrix comprising a solid support transparent to light and a synergistic combination of at least two different types of particles inside of the solid support transparent to light, wherein:

(1) a first type of particles comprising nano-emitting particles adapted to nonlinearly absorb one or two photons and emit visible light; and
(2) a second type of particles comprising at least one additive enhancing the nonlinear absorption to one or two photons and the emission of light visible by the nano-emitting particles, thus making it possible to intensify and/or modify the light emitted by the nano-emitting particles, the said additive comprising nanoparticles of gold, nanoparticles of silver, semiconductor nanoparticles, nanocellulose, carbon nanotubes, two-dimensional materials, graphene, or conductive and/or semi-conductive polymers.

2. The matrix according to claim 1, wherein the light-transparent solid support comprises a polymeric support, the polymeric support comprising polymethylmethacrylate.

3. The matrix according to any one of claims 1 or 2, wherein the nano-emitting particles comprise quantum dots, quantum wires or rods, quantum wells, quantum rings, nano-crystals, nanoplates, fluorescent molecules , fluorophores, and/or phosphors.

4. A process for making a hybrid projection matrix, the process comprising the following steps:

a) mixing in a solution allowing the synthesis of a solid support transparent to light, a first given amount of a first type of particles comprising nano-emitting particles and a second given quantity of a second type of particles consisting of at least one additive, the additive comprising nanoparticles of gold, nanoparticles of silver, semiconductor nanoparticles, nanocellulose, carbon nanotubes, two-dimensional materials, graphene, or conductive and/or semi-conductive polymers; and
b) solidifying the resulting mixture to obtain the matrix.

5. The process according to claim 4, wherein the solution for synthesizing the solid light-transparent support comprises a monomer which, once polymerized, forms a polymeric support transparent to light.

6. The process according to claim 5, comprising the following steps:

a1) mixing the monomer solution allowing the synthesis of the polymer support, the first given quantity of the first type of particles comprising the nano-emitting particles and the second given quantity of the second type of particles comprising at least one additive;
a2) inserting a polymerization initiator into the mixture; and
b1) allowing the resulting mixture to polymerize to obtain the matrix.

7. The process according to claim 5 or 6, wherein the polymeric support comprises polymethylmethacrylate.

**8.** The process according to any one of claims 5 to 7, wherein the nano-emitting particles comprise quantum dots, quantum wires or rods, quantum wells, quantum rings, nano-crystals, nanoplates, fluorescent molecules , fluorophores, and/or phosphors.

**9.** A three dimensional (3D) imaging volumetric projection system, the system comprising:

(1) a photon emitting source; and
(2) the hybrid projection matrix as defined in any one of claims 1 to 3, the matrix being located downstream of the emitting source in order to receive the photons from the emitting source, the matrix then emitting visible light in order to create a three-dimensional image.

**10.** The system according to claim 9, wherein the laser produces a scan to fill a voxel.

**11.** The system according to claim 10, wherein the laser produces a decoupled three-part scan to increase a total refresh rate of the system, said scanning comprising:

(1) a first X-Y scan for positioning a focal point of the beam for each transverse plane of an image;
(2) a second Z scan for positioning a focal point of the beam for each depth plane of the image; and
(3) a third scan to complete an image and fill a voxel.

**12.** A method for three-dimensional (3D) imaging volumetric projection, the method consisting in projecting photons onto the hybrid projection matrix as defined in any one of claims 1 to 3, the matrix then emitting visible light to form a three-dimensional image.

**13.** The method according to claim 12, wherein the laser produces a decoupled scan in three portions to increase a total refresh rate of the system, the scanning comprising:

(1) a first X-Y scan for positioning a focal point of the beam for each transverse plane of an image;
(2) a second Z scan for positioning a focal point of the beam for each depth plane of the image; and
(3) a third scan to complete an image and fill a voxel.

**14.** The matrix according to any one of claims 1 to 3, wherein the matrix is in the form of a sheet having a thickness between 2 to 5 mm.

**15.** The matrix according to claim 14, wherein the polished sheet has a polished surface.

**FIGURE 1**

**FIGURE 2**

**FIGURE 3**

Position de l'échantillon sur l'axe de translation

**FIGURE 4**

(x) Position de l'échantillon sur l'axe de translation
(y) Intensité de la lumière moyenne

**FIGURE 5**

(x) Position de l'échantillon sur l'axe de translation
(y) Intensité de la lumière moyenne

**FIGURE 6**

(x) Position de l'échantillon sur l'axe de translation
(y) Intensité de la lumière moyenne

**FIGURE 7**

(x) Position de l'échantillon sur l'axe de translation
(y) Intensité de la lumière moyenne

**FIGURE 8**

**FIGURE 9A**

**FIGURE 9B**

**FIGURE 10**

**FIGURE 11**

**FIGURE 12**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7858913 B2, Refai
- US 6897999 B1, Bass
- US 20040227694 A1
- US 20130314416 A1, Kuhlman
- US 20140327747 A1, Kong

**Littérature non-brevet citée dans la description**

- **REISS, PETER et al.** Core/Shell Semiconductor Nanocrystals. *Small,* 2009, vol. 5 (2), 154-168
- **KLIMOV, VICTOR I. ; MEINARDI, FRANCESCO.** Large-area luminescent solar concentrators based on 'Stokes-shift-engineered' nanocrystals in a mass-polymerized PMMA matrix. *Nature Photonics,* 2014, vol. 8, 392-399
- **KARABULUT, IBRAHIM ; BASKOUTAS, SOTIRIOS.** Linear and nonlinear optical absorption coefficients and refractive index changes in spherical quantum dots: Effects of impurities, electric field, size, and optical intensity. *Journal of Applied Physics,* 2008, vol. 103
- **VAN STRYLAND, ERIC W. ; SHEIK-BAHAE, MANSOOR.** Z-Scan Measurements of Optical Nonlinearities. *Characterization Techniques and Tabulations for Organic Nonlinear Materials,* 655-692
- **MARIE-EVE LECAVALIER et al.** Water-dispersable colloidal quantum dots for the détection of ionizing radiation. *Chem. Commun.,* 2013, vol. 49, 11629-11631
- **C.B. MURRAY.** Synthesis and characterization of nearly monodisperse CdE (E = sulfur, selenium, tellurium) semiconductor nanocrystallites. *J. Am. Chem. Soc.,* 1993, vol. 115 (19), 8706-8715
- **SAM BEDDAR ; LUC BEAULIEU.** Scintillation Dosimetry
- **DOWNING.** A Three-Color, Solid State, Three-Dimensional Display. *Science,* 1996, 5279-1185